# EUROPEAN PATENT APPLICATION

(11) **EP 4 170 801 A1**
(43) Date of publication of application: **26.04.2023**
(21) Application number: 21949525.6
(22) Date of filing: 29.07.2021
(51) Int. Cl.: H01M 50/30

(54) **BATTERY CELL AND MANUFACTURING METHOD AND SYSTEM THEREFOR, BATTERY, AND POWER CONSUMING DEVICE**

(71) Applicant: Contemporary Amperex Technology Co., Limited, Ningde, Fujian 352100 (CN)
(72) Inventor: YANG, Piaopiao, Ningde, Fujian 352100 (CN); CHEN, Xiaobo, Ningde, Fujian 352100 (CN); LI, Yao, Ningde, Fujian 352100 (CN); GU, Mingguang, Ningde, Fujian 352100 (CN); QIAN, Ou, Ningde, Fujian 352100 (CN); JIN, Qiu, Ningde, Fujian 352100 (CN)
(74) Representative: Rowlands, Stuart Michael
(86) International application number: PCT/CN2021/109405
(87) International publication number: WO 2023/004723

(57) **Abstract**

Embodiments of the present application provide a battery cell, a method and system for manufacturing the battery cell, a battery, and a power consuming device. The battery cell according to this embodiment includes an electrode assembly, a housing, a pressure relief mechanism, and a cap assembly. The housing is provided with an accommodating space for accommodating the electrode assembly, and includes a first side plate on a side in a first direction; the pressure relief mechanism is arranged on the first side plate; and the cap assembly is configured to seal the housing; wherein an inner surface of the first side plate of the housing is provided with a first passageway extending along the inner surface, and the first passageway is configured to direct a gas in the accommodating space to the pressure relief mechanism, such that the pressure relief mechanism is actuated and relieves a pressure when the pressure reaches a threshold. In the present application, an exhaust rate when the battery cell is subjected to thermal runaway can be improved, and the safety of the battery cell can be improved.

## Description

### Technical Field

Embodiments of the present application relate to the field of batteries, and in particular, to a battery cell, a method and system for manufacturing the battery cell, a battery, and a power consuming device.

### Background Art

Battery cells are widely used in electronic devices, such as a mobile phone, a notebook computer, an electromobile, an electric vehicle, an electric airplane, an electric ship, an electric toy car, an electric toy ship, an electric toy airplane, and an electric tool. The battery cells may include a nickel-cadmium battery cell, a nickel-hydrogen battery cell, a lithium-ion battery cell, a secondary alkaline zinc-manganese battery cell, etc.

In the development of the battery technology, in addition to improving the performance of battery cells, the safety is also a non-negligible issue. If the safety of battery cells cannot be guaranteed, the battery cells cannot be used. Therefore, how to enhance the safety of battery cells is an urgent technical problem to be solved in the battery technology.

### Summary of the Invention

Embodiments of the present application provide a battery cell, a method and system for manufacturing the battery cell, a battery, and a power consuming device, which can enhance the safety of the battery cell.

According to a first aspect of the present application, an embodiment of the present application provides a battery cell, including an electrode assembly, a housing, a pressure relief mechanism, and a cap assembly. The housing is provided with an accommodating space for accommodating the electrode assembly, and includes a first side plate on a side in a first direction; the pressure relief mechanism is arranged on the first side plate; and the cap assembly is configured to seal the housing; wherein an inner surface of the first side plate of the housing is provided with a first passageway extending along the inner surface, and the first passageway is configured to direct a gas in the accommodating space to the pressure relief mechanism, such that the pressure relief mechanism is actuated and relieves a pressure when the pressure reaches a threshold.

In the foregoing solution, in this embodiment of the present application, the first side plate of the housing is provided with the first passageway capable of directing the gas released when the battery cell is subjected to thermal runaway from the accommodating space to the pressure relief mechanism, such that the pressure relief mechanism is actuated in time and releases the gas, thereby improving an exhaust rate when the battery cell is subjected to thermal runaway and improving the safety of the battery cell

In some embodiments, the first passageway includes a plurality of first grooves provided in the inner surface of the first side plate and extending along the inner surface of the first side plate, and an end of each of the first grooves communicates with the pressure relief mechanism. The first passageway is provided as the plurality of first grooves, and each of the first grooves communicates with the pressure relief mechanism. When the battery cell is subjected to thermal runaway, the released gas can be directed along the first grooves from the accommodating space to the pressure relief mechanism for discharge, such that the exhaust rate when the battery cell is subjected to thermal runaway is increased, and the safety of the battery cell is improved. In addition, the first grooves are provided in the inner surface of the first side plate, thereby avoiding occupancy of the accommodating space which may impair the energy density of the battery cell.

In some embodiments, the plurality of first grooves are parallel to each other, which is beneficial to improving the exhaust efficiency in a lengthwise direction of the first grooves. Or the plurality of first grooves extend radially with the pressure relief mechanism as the center, which is beneficial to improve the exhaust efficiency of the pressure relief mechanism in a circumferential direction.

In some embodiments, protrusions protruding toward the accommodating space is formed on the inner surface of the first side plate, each of the protrusions has a top surface away from the inner surface, and a first passageway is formed in a space between the top surface of the protrusion and the inner surface. In this embodiment, the top surface of the protrusion is used to support the electrode assembly, and the first passageway is formed in the space between the top surface of the protrusion and the inner surface, which can increase the exhaust rate when the battery cell is subjected to thermal runaway, and improve the safety of the battery cell.

In some embodiments, the first passageway includes a plurality of sub-passageways communicating with the pressure relief mechanism; and a plurality of protrusions are provided, and the plurality of protrusions extend radially with the pressure relief mechanism as the center and are spaced apart from each other, such that one sub-passageway is formed between two adjacent protrusions and the inner surface. The plurality of protrusions extend radially with the pressure relief mechanism as the center and are spaced apart from each other, which is beneficial to improve the exhaust efficiency of the pressure relief mechanism in a circumferential direction.

In some embodiments, the first passageway includes a plurality of sub-passageways and a connection passageway; a plurality of protrusions are provided, and each of the protrusions extends substantially in a second direction of the first side plate; the plurality of protrusions are arranged at intervals in a third direction of the first side plate and are spaced apart from each other; one sub-passageways is formed between two adjacent protrusions and the inner surface, and two adjacent sub-passageways communicate with each other through the connection passageway; at least one of the sub-passageways communicates with the pressure relief mechanism through the connection passageway; the second direction is perpendicular to the first direction; and the third direction is perpendicular to the first direction and the second direction. By means of the provision of the protrusions extending in the second direction of the first side plate, one sub-passageway is formed between two adjacent protrusions and the inner surface, and the sub-passageway is connected to the pressure relief mechanism through the connection passageway, such that the exhaust efficiency in the second direction can be increased.

In some embodiments, the housing includes a pair of second side plates arranged opposite one another in the second direction; and a third gap is provided between an end portion of each of the protrusions in the second direction and one second side plate adjacent thereto, and the third gap forms at least a part of the connection passageway. By providing the third gap to form a part of the connection passageway for connecting the sub-passageway to the pressure relief mechanism, the gas in the sub-passageway can be quickly directed through the connection passageway to the pressure relief mechanism for discharge.

In some embodiments, at least one of the protrusions includes a plurality of sub-protrusions, the sub-protrusions are spaced in the second direction, a fourth gap is formed between adjacent sub-protrusions, and the fourth gap forms at least a part of the connection passageway. By providing the fourth gap to form a part of the connection passageway for connecting the sub-passageway to the pressure relief mechanism, the gas in the sub-passageway can be quickly directed through the connection passageway to the pressure relief mechanism for discharge.

In some embodiments, the protrusions are formed as arcs or broken lines which protrude away from the pressure relief mechanism in the third direction. The arc-shaped or broken line-shaped protrusions protruding in the direction away from the pressure relief mechanism can direct a gas flow toward the pressure relief mechanism during exhausting, which is beneficial to rapid exhaust of the gas.

In some embodiments, an insulating layer is provided on a top surface of each of the protrusions, and the insulating layer is configured to implement insulation between the electrode assembly and the housing, without additional supporting members, thereby reducing space occupation and improving the energy density of the battery cell without impairing the exhaust of the battery cell.

In some embodiments, the housing includes a pair of second side plates opposite one another in the second direction, and the accommodating space comprises a first gap provided between the electrode assembly and each of the second side plates; the second direction is perpendicular to the first direction; and the housing further includes a pair of third side plates arranged opposite one another in the third direction, and the accommodating space further includes a second gap provided between the electrode assembly and each of the third side plates; the third direction is perpendicular to the first direction and the second direction; and the first passageway communicates with the first gap and/or the second gap. The first passageway communicates with the first gap and/or the second gap to implement communication between the first passageway and the accommodating space.

In some embodiments, from a position at which the first passageway communicates with the pressure relief mechanism, at least part of the first passageway has a depth gradually decreasing in a direction away from the pressure relief mechanism. Therefore, the at least part of the first passageway has a depth gradually increasing in a direction close to the pressure relief mechanism, creating a slope inclined toward an exhaust direction of the pressure relief mechanism, which is more beneficial to directing the gas to the pressure relief mechanism for discharge and improves the exhaust efficiency.

In some embodiments, the battery cell further includes a supporting member arranged between the first side plate and the electrode assembly to support the electrode assembly, wherein the supporting member is provided with a second passageway through which the first passageway communicate with the accommodating space. The second passageway is formed in the supporting member to allow the first passageway to communicate with the accommodating space, such that a passageway area for exhaust can be increased, and the exhaust efficiency can be improved.

In some embodiments, the second passageway comprises first through holes running through the supporting member in the first direction, and the first passageway communicate with the accommodating space through the first through holes.

In some embodiments, the housing includes a pair of second side plates opposite one another in the second direction, and the accommodating space comprises a first gap provided between the electrode assembly and each of the second side plates; the second direction is perpendicular to the first direction; and the housing further includes a pair of third side plates arranged opposite one another in the third direction, and the accommodating space further includes a second gap provided between the electrode assembly and each of the third side plates; the third direction is perpendicular to the first direction and the second direction; the supporting member has a first surface and a second surface which are arranged opposite one another, the first surface facing the first side plate, and the second surface facing the electrode assembly; and the second passageway comprises a second groove provided in the first surface, the second groove communicates with the first gap and/or the second gap, and the second groove communicates with the first passageway. The provision of the second groove on the supporting member which communicates with the first gap and/or the second gap and the first passageway can provide an increased passageway area for exhaust and higher exhaust efficiency.

In some embodiments, the battery cell further includes an insulating film configured to be wrapped around a portion of the electrode assembly and separate the electrode assembly from the housing, wherein the insulating film includes a first side film located between the electrode assembly and the supporting member; and the first side film is provided with second through holes, and the projections of the second through holes and the first through holes of the supporting member in the first direction do not overlap. The projections of the second through holes in the first side film of the insulating film and of the first through holes in the supporting member in the first direction do not overlap, such that reliable insulation between the electrode assembly and the first side plate can be implemented, and the accommodating space communicates with the first passageway through the first through holes and the second through holes, thereby improving the exhaust efficiency. According to a second aspect of the present application, provided is a battery, including a battery cell according to the first aspect.

According to a third aspect of the present application, provided is a power consuming device, including: a battery according to the second aspect.

In some embodiments, the power consuming device is a vehicle, a ship or a spacecraft.

According to a fourth aspect of the present application, provided is a method for manufacturing a battery cell, including providing an electrode assembly; providing a housing which is provided with an accommodating space for accommodating the electrode assembly; the housing including a first side plate located on a side in a first direction; providing a pressure relief mechanism which is arranged on the first side plate; providing a cap assembly which is configured to seal the housing; and assembling the electrode assembly, the housing, the pressure relief mechanism, and the cap assembly to form the battery cell; wherein providing a housing includes forming, in an inner surface of the first side plate of the housing, a first passageway extending along the inner surface, and the first passageway is configured to direct a gas in the accommodating space to the pressure relief mechanism, such that the pressure relief mechanism is actuated and relieves a pressure when the pressure reaches a threshold.

According to a fifth aspect of the present application, provided is a system for manufacturing a battery cell, the system including: an electrode assembly provision device configured to provide an electrode assembly; a housing provision device configured to provide a housing which is provided with an accommodating space for accommodating the electrode assembly; the housing including a first side plate located on a side in a first direction; a pressure relief mechanism provision device configured to provide a pressure relief mechanism which is arranged on the first side plate; a cap assembly provision device configured to provide a cap assembly which is configured to seal the housing; and an assembly device configured to assemble the electrode assembly, the housing, the pressure relief mechanism, and the cap assembly to form the battery cell; wherein a first passageway extending along an inner surface is formed in the inner surface of the first side plate of the housing, and the first passageway is configured to direct a gas in the accommodating space to the pressure relief mechanism, such that the pressure relief mechanism is actuated and relieves a pressure when the pressure reaches a threshold.

The battery cell, the method and system for manufacturing the battery cell, the battery, and the power consuming device provided by the present application can improve the exhaust efficiency when the battery cell is subjected to thermal runaway, and improve the safety of the battery cell.

### Brief Description of the Drawings

The accompanying drawings described herein are intended to provide a further understanding of the present application, and form a part of the present application. The illustrative embodiments of the present application and the description thereof are intended to explain the present application and do not unduly limit the present application. In the drawings:
FIG. 1 is a schematic structural diagram of a vehicle according to some embodiments of the present application;
FIG. 2 is a schematic exploded view of a battery according to some embodiments of the present application;
FIG. 3 is a schematic structural diagram of a battery module shown in FIG. 2;
FIG. 4 is a schematic exploded view of a battery cell according to some embodiments of the present application;
FIG. 5 is a schematic structural diagram of a housing of a battery cell according to some embodiments of the present application;
FIG. 6 is a schematic cross-sectional view of the housing shown in FIG. 5 taken along line A-A;
FIG. 7 is a schematic top view of a battery cell according to some embodiments of the present application;
FIG. 8 is a schematic cross-sectional view, taken along line B-B, of the battery cell shown in FIG. 7 which uses the housing of the embodiment of FIG. 5;
FIG. 9 is a schematic enlarged view of part C of the battery cell shown in FIG. 8;
FIG. 10 is a schematic enlarged view of part D of the battery cell shown in FIG. 8;
FIG. 11 is a schematic structural diagram of a housing of a battery cell according to yet another embodiment of the present application;
FIG. 12 is a schematic structural diagram of a housing of a battery cell according to yet another embodiment of the present application;
FIG. 13 is a schematic top view of a battery cell according to yet another embodiment of the present application;
FIG. 14 is a schematic cross-sectional view, taken along line E-E, of the battery cell shown in FIG. 13 which uses the housing of the embodiment of FIG. 12;
FIG. 15 is a schematic enlarged view of part F of the battery cell shown in FIG. 14;
FIG. 16 is a schematic structural diagram of a housing of a battery cell according to yet another embodiment of the present application;
FIG. 17 is a schematic structural diagram of a housing of a battery cell according to yet another embodiment of the present application;
FIG. 18 is a schematic structural diagram of a battery cell provided with a supporting member according to yet another embodiment of the present application;
FIG. 19 is a schematic structural diagram of a supporting member of a battery cell according to yet another embodiment of the present application;
FIG. 20 is a schematic structural diagram of a supporting member of a battery cell according to yet another embodiment of the present application;
FIG. 21 is a schematic structural diagram of a supporting member of a battery cell according to yet another embodiment of the present application;
FIG. 22 is a schematic structural diagram of a battery cell provided with a supporting member and an insulating film according to yet another embodiment of the present application;
FIG. 23 is a schematic exploded view of a supporting member and an insulating film of a battery cell according to yet another embodiment of the present application;
FIG. 24 is a schematic top view of the combined supporting member and insulating film shown in FIG. 23;
FIG. 25 is a schematic flowchart of a method for manufacturing a battery cell according to some embodiments of the present application; and
FIG. 26 is a schematic block diagram of a system for manufacturing a battery cell according to some embodiments of the present application.

In the accompanying drawings, the figures are not drawn to scale.

### Detailed Description of Embodiments

In order to make the objectives, technical solutions and advantages of the embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All the other embodiments obtained by those of ordinary skill in the art based on the embodiments of the present application without creative efforts shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the description of the accompanying drawings described above are intended to cover non-exclusive inclusion. The terms "first", "second", etc. in the specification and the claims of the present application as well as the foregoing accompanying drawings are used to distinguish between different objects, rather than describing a specific order or a primary-secondary relationship.

In the present application, "embodiment" mentioned means that the specific features, structures and characteristics described with reference to the embodiments may be included in at least one embodiment of the present application. That phrase at various locations in the specification does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, the terms may be a fixed connection, a detachable connection, or an integral connection; or may be a direct connection, an indirect connection by means of an intermediate medium, or internal communication between two elements. For those of ordinary skills in the art, the specific meanings of the foregoing terms in the present application may be understood according to specific circumstances. The term "and/or" in the present application is merely a description of the associated relationship of associated objects, representing that three relationships may exist, for example, A and/or B, may be expressed as: the three instances of A alone, A and B simultaneously, and B alone. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

"A plurality of' appearing in the present application means two or more (including two).

In the present application, a battery cell may comprise a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of the present application. The battery cell may be cylindrical, flat, cuboid or in another shape, which is not limited in the embodiments of the present application. The battery cell is generally classified into three types according to a packaging approach: a cylindrical battery cell, a cuboid battery cell, and a pouch battery cell, which is also not limited in the embodiments of the present application.

A battery mentioned in an embodiment of the present application refers to a single physical module including one or more battery cells to provide higher voltage and capacity. For example, the battery described in the present application may include a battery module, a battery pack, etc. The battery generally includes a case for packaging one or more battery cells. The case may prevent liquid or other foreign matters from affecting charging or discharging of the battery cells.

The battery cell comprises an electrode assembly and an electrolyte, the electrode assembly comprising a positive electrode plate, a negative electrode plate, and a separator. The battery cell operates mainly by relying on movements of metal ions between the positive plate and the negative plate. The positive electrode plate includes a positive current collector and a positive active material layer, wherein a surface of the positive current collector is coated with the positive active material layer. The positive current collector includes a positive current collecting portion and a positive protrusion protruding from the positive current collecting portion, wherein the positive current collecting portion is coated with the positive active material layer, at least a part of the positive protrusion is not coated with the positive active material layer, and the positive protrusion acts as a positive electrode tab. Taking a lithium-ion battery as an example, the positive current collector may be made of aluminum, and the positive active material layer comprises a positive active material which may be lithium cobalt oxides, lithium iron phosphate, ternary lithium, lithium manganate, etc. The negative electrode plate comprises a negative current collector and a negative active material layer, wherein a surface of the negative current collector is coated with the negative active material layer. The negative current collector comprises a negative current collecting portion and a negative protrusion protruding from the negative current collecting portion, wherein the negative current collecting portion is coated with the negative active material layer, at least a part of the negative electrode protrusion is not coated with the negative active material layer, and the negative protrusion acts as a negative electrode tab. The negative current collector may be made of copper, and the negative active material layer comprises a negative active material which may be carbon, silicon, etc. In order to ensure that no fusing occurs when a large current passes, a plurality of positive electrode tabs are provided and are stacked together, and a plurality of negative electrode tabs are provided and are stacked together. The separator may be made of polypropylene (PP), polyethylene (PE), etc. In addition, the electrode assembly may be of a winding structure or a laminated structure, which is not limited in the embodiments of the present application.

The battery cell may further comprise a housing assembly, the housing assembly is internally provided with an accommodating cavity, and the accommodating cavity is an enclosed space provided by the housing assembly for the electrode assembly and the electrolyte.

For the battery cell, main safety hazards occur during charging and discharging. In addition, a suitable environmental temperature design is further provided. To effectively avoid unnecessary losses, there are usually at least three protection measures for the battery cell. Specifically, the protection measures include at least a switching element, an appropriate separator material selected, and a pressure relief mechanism. The switching element refers to an element which can stop the charging or discharging of a battery when the temperature or resistance in a battery cell reaches a certain threshold. The separator is configured to isolate a positive electrode plate from a negative electrode plate, and can automatically dissolve micron-sized (or even nano-sized) micropores attached thereto when the temperature rises to a certain value, such that metal ions cannot pass through the separator and an internal reaction of the battery cell is terminated.

The pressure relief mechanism refers to an element or component that is actuated, when an internal pressure of the battery cell reaches a predetermined threshold, to relieve the internal pressure. The threshold design varies according to different design requirements. The threshold may depend on materials of one or more of the positive electrode plate, the negative electrode plate, the electrolyte, and the separator in the battery cell. The pressure relief mechanism may be in the form of an explosion-proof valve, a gas valve, a pressure relief valve, a safety valve, etc., and may specifically use a pressure-sensitive element or construction, that is, when the internal pressure of the battery cell reaches the predetermined threshold, the pressure relief mechanism performs an action or a weak structure provided in the pressure relief mechanism is broken, thereby creating an opening or a passageway for relief of the internal pressure or temperature.

The "actuation" mentioned in the present application means that the pressure relief mechanism acts or is activated into a certain state, such that the internal pressure of the battery cell is relieved. Actions of the pressure relief mechanism may include, but are not limited to: at least a portion of the pressure relief mechanism being broken, cracking, being torn or opened, etc. When the pressure relief mechanism is actuated, high-temperature and high-pressure substances inside the battery cell are discharged outwards from an actuated part as emissions. In this way, the pressure of the battery cell can be relieved under a controllable pressure, thereby preventing the occurrence of potentially more serious accidents.

The emissions from the battery cell mentioned in the present application include, but are not limited to: an electrolyte, dissolved or split positive and negative electrode plates, fragments of a separator, a high-temperature and high-pressure gas generated by a reaction, flames, etc.

The pressure relief mechanism on the battery cell has an important effect on the safety of the battery cell. For example, when a phenomenon such as a short circuit or overcharge occurs, the battery cell may be internally subjected to thermal runaway and the pressure may suddenly rise. In this case, the internal pressure can be relieved to outside by actuating the pressure relief mechanism to prevent the battery cell from exploding and catching fire. The pressure relief mechanism is usually mounted to the housing assembly. The inventors have found that, to increase the energy density of the battery cell, the space available for gas flow inside the battery cell is limited, resulting in a relatively low rate of gas exhaust during thermal runaway. In addition, the pressure relief mechanism may be blocked by a member inside the housing assembly, resulting in poor exhaust and potential safety hazards.

In view of this, an embodiment of the present application provides a technical solution in which a battery cell includes an electrode assembly, a housing, a pressure relief mechanism, and a cap assembly. The housing is provided with an accommodating space for accommodating the electrode assembly, and includes a first side plate on a side in a first direction; the pressure relief mechanism is arranged on the first side plate; and the cap assembly is configured to seal the housing; wherein an inner surface of the first side plate of the housing is provided with a first passageway extending along the inner surface, and the first passageway is configured to direct a gas in the accommodating space to the pressure relief mechanism, such that the pressure relief mechanism is actuated and relieves a pressure when the pressure reaches a threshold. When the battery cell having this structure is subjected to thermal runaway, a high-temperature and high-pressure gas is directed to the pressure relief mechanism, such that the exhaust rate is increased and the safety performance is improved.

The technical solution described in the embodiment of the present application is applicable to a battery and a power consuming device using a battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, or the like. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

For ease of description, an example in which a power consuming device refers to a vehicle is used for description in the following embodiments.

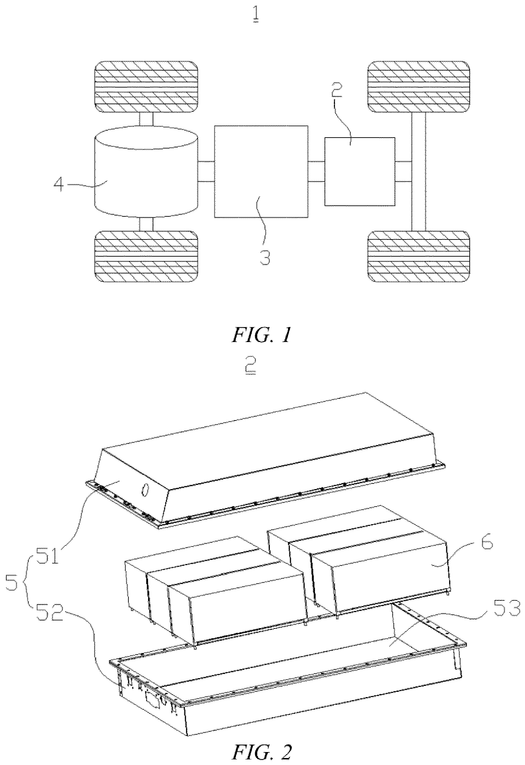

FIG. 1 is a schematic structural diagram of a vehicle according to some embodiments of the present application. As shown in FIG. 1, a battery 2 is provided inside the vehicle 1, and the battery 2 may be arranged at the bottom, the head or the tail of the vehicle 1. The battery 2 may be configured for power supply for the vehicle 1. For example, the battery 2 may serve as a power source for operating the vehicle 1.

The vehicle 1 may further include a controller 3 and a motor 4, and the controller 3 is configured to control the battery 2 to supply power to the motor 4, for example, to satisfy the operating power requirements during starting, navigation and traveling of the vehicle 1. In some embodiments of the present application, the battery 2 can not only serve as a power source for operating the vehicle 1, but can also serve as a power source for driving the vehicle 1, in place of or partially in place of fuel or natural gas, to provide driving power for the vehicle 1.

FIG. 2 is a schematic exploded view of a battery according to some embodiments of the present application. As shown in FIG. 2, the battery 2 includes a case 5 and battery cells (not shown in FIG. 2) which are accommodated in the case 5.

The case 5 is configured to accommodate the battery cells, and the case 5 may have various structures. In some embodiments, the case 5 may include a first case portion 51 and a second case portion 52, the first case portion 51 and the second case portion 52 cover each other, and the first case portion 51 and the second case portion 52 jointly define an accommodating space 53 for accommodating the battery cells. The second case portion 52 may be of a hollow structure with an open end, the first case portion 51 has a plate-like structure, and the first case portion 51 covers an open side of the second case portion 52 to form the case 5 with the accommodating space 53. The first case portion 51 and the second case portion 52 each may also be of a hollow structure with an open side, and the open side of the first case portion 51 covers the open side of the second case portion 52 to form the case 5 with the accommodating space 53. Of course, the first case portion 51 and the second case portion 52 may have various shapes such as a cylinder and a cuboid.

To improve sealing performance after the first case portion 51 and the second case portion 52 are connected to each other, a seal, such as a sealant and a seal ring, may be provided between the first case portion 51 and the second case portion 52.

Assuming that the first case portion 51 covers the top of the second case portion 52, the first case portion 51 may also be referred to as an upper case cover, and the second case portion 52 may also be referred to as a lower case.

In the battery 2, one or more battery cells may be provided. If a plurality of battery cells are provided, the plurality of battery cells may be in series connection or parallel connection or series-parallel connection. The series-parallel connection means that some of the plurality of battery cells are in series connection and some are in parallel connection. The plurality of battery cells may be directly in series connection or parallel connection or series-parallel connection, and then a unit composed of the plurality of battery cells is accommodated in the case 5. Of course, a plurality of battery cells may also be first in series connection or parallel connection or series-parallel connection to form a battery module 6, and a plurality of battery modules 6 are in series connection or parallel connection or series-parallel connection to form a unit and are accommodated in the case 5.

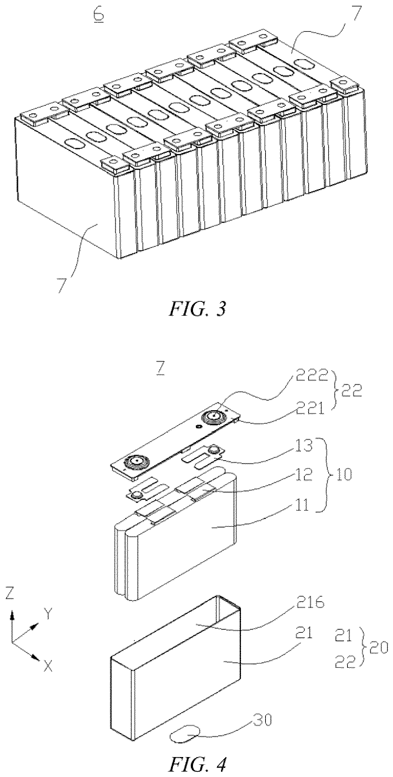

FIG. 3 is a schematic structural diagram of the battery module shown in FIG. 2. As shown in FIG. 3, in some embodiments, a plurality of battery cells 7 are provided, and the plurality of battery cells 7 are connected in series or in parallel or in series-parallel to form a battery module 6. A plurality of battery modules 6 are connected in series or in parallel or in series-parallel to form a unit and are accommodated in the case.

The plurality of battery cells 7 in the battery module 6 may be electrically connected to each other by means of a busbar component to implement series connection or parallel connection or series-parallel connection between the plurality of battery cells 7 in the battery module 6.

FIG. 4 is a schematic exploded view of a battery cell according to some embodiments of the present application.

As shown in FIG. 4, the battery cell 7 provided in the embodiment of the present application includes an electrode assembly 10 and a housing assembly 20, wherein the electrode assembly 10 is accommodated in the housing assembly 20.

In some embodiments, the battery cell 7 includes: an electrode assembly 10, a housing 21, a pressure relief mechanism 30, and a cap assembly 22. The housing 21 is provided with an accommodating space 216 for accommodating the electrode assembly 10; the housing 21 comprises a first side plate 212 located on a side in a first direction Z; the pressure relief mechanism 30 is arranged on the first side plate 212; and the cap assembly 22 is configured to seal the housing 21; wherein an inner surface 2120 of the first side plate 212 of the housing 21 is provided with a first passageway extending along the inner surface 2120, and the first passageway is configured to direct a gas in the accommodating space 216 to the pressure relief mechanism 30, such that the pressure relief mechanism 30 is actuated and relieves a pressure when the pressure reaches a threshold.

In some embodiments, the housing assembly 20 may be further configured to accommodate an electrolyte, such as an electrolyte solution. The housing assembly 20 may have various structural forms.

In some embodiments, the housing assembly 20 may include a housing 21 and a cap assembly 22. The housing 21 has a hollow structure with one open side, and the cap assembly 22 covers the opening of the housing 21 and provides a sealed connection, in order to form an accommodating cavity for accommodating the electrode assembly 10 and the electrolyte.

The housing 21 may have various shapes such as a cylinder and a cuboid. The shape of the housing 21 may be determined depending on the specific shape of the electrode assembly 10. For example, if the electrode assembly 10 is of a cylindrical structure, a cylindrical housing may be selected; and if the electrode assembly 10 is of a cuboid structure, a cuboid housing may be used.

In some embodiments, the cap assembly 22 includes an end cap 221, and the end cap 221 covers the opening of the housing 21. The end cap 221 may have various structures, for example, the end cap 221 has a plate-like structure. As an example, in FIG. 4, the housing 21 has a cuboid structure, the end cap 221 has a plate-like structure, and the end cap 221 covers the opening at the top of the housing 21.

The end cap 221 may be made of an insulating material (such as plastic) or an electrically conductive material (such as metal). If the end cap 221 is made of a metal material, the cap assembly 22 may further include an insulating plate which is located on a side of the end cap 221 facing the electrode assembly 10, so as to insulate and separate the end cap 221 from the electrode assembly 10.

In some embodiments, the cap assembly 22 may further include electrode terminals 222, and the electrode terminals 222 are mounted on the end cap. Two electrode terminals 222 are provided. The two electrode terminals 222 are defined as a positive electrode terminal and a negative electrode terminal respectively. Both of the positive electrode terminal and the negative electrode terminal are configured to be electrically connect to the electrode assembly 10 to output electric energy generated by the electrode assembly 10.

In some other embodiments, the housing assembly 20 may also have another structure. For example, the housing assembly 20 includes a housing 21 and two cover assemblies 22, wherein the housing 21 has a hollow structure with two open opposite sides, and each of cap assembly 22 correspondingly covers one opening of the housing 21 and forms a sealed connection, to form an accommodating cavity for accommodating the electrode assembly 10 and the electrolyte. In this structure, one of the cap assemblies 22 may be provided with two electrode terminals 222 while the other cap assembly 22 is provided with no electrode terminal 222, or each of the two cover assemblies 22 may be provided with one electrode terminal 222.

In the battery cell 7, there may be one or more electrode assemblies 10 accommodated in the housing assembly 20. As an example, in FIG. 4, two electrode assemblies 10 are provided.

Each of the electrode assemblies 10 comprises a positive electrode plate, a negative electrode plate, and a separator. The electrode assembly 10 may be a wound electrode assembly, a laminated electrode assembly, or an electrode assembly having another form. In some embodiments, the electrode assembly 10 is a wound electrode assembly. The positive electrode plate, the negative electrode plate, and the separator each have a strip structure. In the embodiments of the present application, the positive electrode plate, the negative electrode plate, and the separator may be sequentially stacked and wound for two turns or more to form the electrode assembly 10.

In some other embodiments, the electrode assembly 10 is a laminated electrode assembly. Specifically, the electrode assembly 10 includes a plurality of positive electrode plates and a plurality of negative electrode plates, the positive electrode plates and the negative electrode plates are alternately stacked, and a stacking direction is parallel to a thickness direction of the positive electrode plates and a thickness direction of the negative electrode plates.

Seen from the appearance of the electrode assembly 10, the electrode assembly 10 comprises a main body portion 11 and a tab portion 12 connected to the main body portion. For example, the main body portion extends out from an end of the main body portion close to the cap assembly.

In some embodiments, two tab portions 12 are provided which are defined as a positive electrode tab portion and a negative electrode tab portion respectively. The positive electrode tab portion and the negative electrode tab portion may extend from the same end of the main body portion 11, or may extend from two opposite ends of the main body portion 11 respectively.

The main body portion 11 is a core portion of the electrode assembly 10 to implement charging and discharging functions, and the tab portion 12 is configured to extract currents generated by the main body portion 11. The main body portion 11 includes a positive current collecting portion of a positive current collector, a positive active material layer, a negative current collecting portion of a negative current collector, a negative active material layer, and a separator. The positive electrode tab portion includes a plurality of positive electrode tabs, and the negative electrode tab portion includes a plurality of negative electrode tabs.

The tab portion 12 is configured to be electrically connected to the electrode terminals 222. The tab portion 12 may be directly connected to the electrode terminals 222 in a manner such as welding, or may be indirectly connected to the electrode terminals 222 by means of other members. For example, the battery cell 7 further includes current collecting members 13, and each current collecting member 13 is configured to electrically connect the electrode terminals 222 to the tab portion 12. Two current collecting members 13 are provided. The two current collecting members 13 are defined as a positive current collecting member and a negative current collecting member respectively. The positive current collecting member is configured to electrically connect the positive electrode terminal to the positive electrode tab portion, and the negative current collecting member is configured to electrically connect the negative electrode terminal to the negative electrode tab portion. When the battery cell 7 is provided with a plurality of electrode assemblies 10, the positive current collecting members of the plurality of electrode assemblies 10 may be integrally provided, and the negative current collecting members of the plurality of electrode assemblies 10 may be integrally provided.

The first side plate 212 is located on one side of the housing assembly 20 in the first direction Z. The housing 21 of the housing assembly 20 has an end opening on the other side opposite to the first side plate 212 in the first direction Z.

When the housing 21 has a hollow structure with one open end, the first side plate 212 is a base plate of the housing 21 which is located on a side of the electrode assembly 10 which faces away from the cap assembly 22.

The pressure relief mechanism 30 is arranged on the first side plate 212. The pressure relief mechanism 30 may be a part of the first side plate 212, or may be separated from the first side plate 212. The first side plate 212 is provided with a pressure relief port 210 penetrating in its thickness direction, and the pressure relief mechanism 30 is fixed to the first side plate 212 in a manner such as welding and covers the pressure relief port 210. The pressure relief port 210 is sealed by the pressure relief mechanism 30 to separate spaces on inner and outer sides of the first side plate 212 and to prevent the electrolyte from flowing out through the pressure relief port 210 during normal operations.

The pressure relief mechanism 30 is configured to be actuated, when the internal pressure of the battery cell 7 reaches a threshold, to relieve the internal pressure. When an excessive gas generated by the battery cell 7 causes the internal pressure of the housing 21 to rise and reach the threshold, the pressure relief mechanism 30 performs an action or a weak structure provided in the pressure relief mechanism 30 is broken, and the gas and other high-temperature and high-pressure substances are released to the outside through a cracked opening of the pressure relief mechanism 30 and the pressure relief port 210, thereby preventing the battery cell 7 from exploding.

The pressure relief mechanism 30 may have a variety of possible pressure relief structures, and the embodiments of the present application are not limited thereto. For example, the pressure relief mechanism 30 may be a pressure-sensitive pressure relief mechanism configured to crack when the internal gas pressure of the battery cell 7 provided with the pressure-sensitive pressure relief mechanism reaches the threshold.

In some embodiments, an indentation, a groove or another structure is formed on the pressure relief mechanism 30 to reduce local strength of the pressure relief mechanism 30 and form a weak structure on the pressure relief mechanism 30. When the internal pressure of the battery cell 7 reaches the threshold, the pressure relief mechanism 30 is broken at the weak structure, and the pressure relief mechanism 30 is folded over along the broken portion and creates an opening to release high-temperature and high-pressure substances. When a phenomenon such as a short circuit or overcharge occurs, the battery cell 7 is subjected to thermal runaway and releases a large amount of high-temperature and high-pressure substances, such as a high-temperature and high-pressure gas. The first passageway may direct a gas flow to direct the gas in the accommodating space 216 to the pressure relief mechanism 30, and the gas acts on a pressure bearing surface of the pressure relief mechanism 30 and applies a pressure to the pressure relief mechanism 30; as the gas increases, the pressure relief mechanism 30 is subjected to a greater pressure, and the pressure relief mechanism 30 is actuated when the pressure reaches a threshold, to release the gas and other high-temperature and high-pressure substances outside the battery cell 7, thereby relieving the internal pressure of the battery cell 7 to outside to prevent the battery cell 7 from exploding and catching fire.

In the embodiments of the present application, the first side plate 212 of the housing 21 is provided with a first passageway 2151 capable of directing the gas released when the battery cell 7 is subjected to thermal runaway from the accommodating space 216 to the pressure relief mechanism 30, such that the pressure relief mechanism 30 is actuated in time and releases the gas, thereby improving an exhaust rate when the battery cell 7 is subjected to thermal runaway and improving the safety of the battery cell 7.

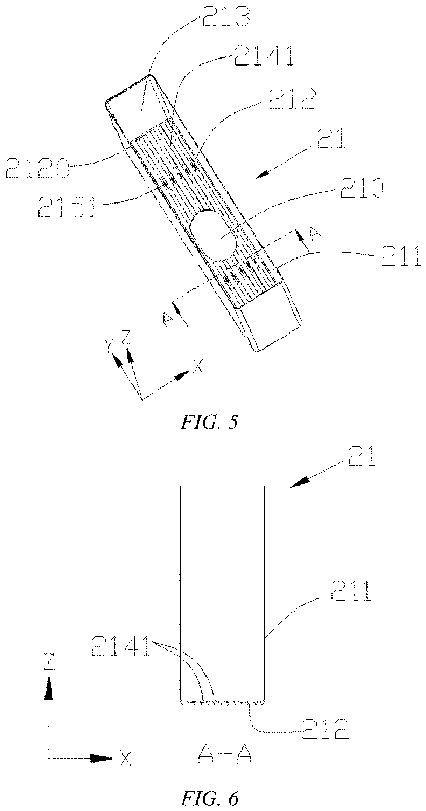

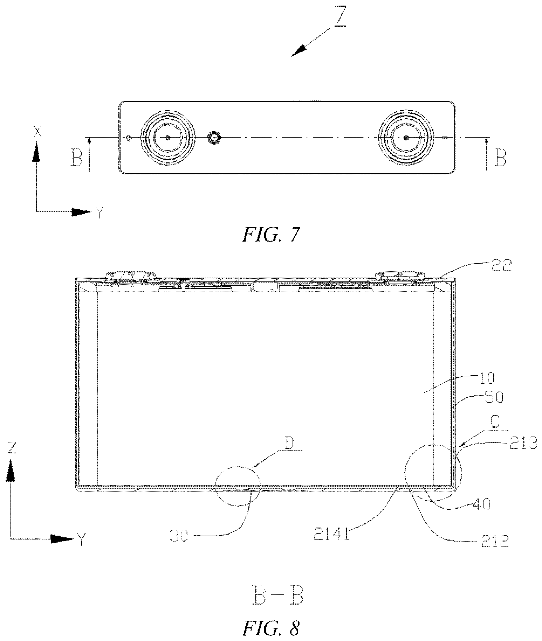

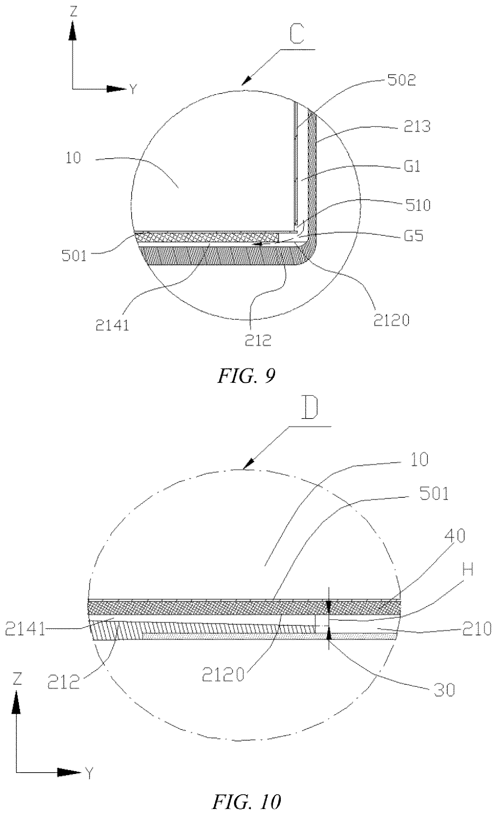

FIG. 5 is a schematic structural diagram of a housing of a battery cell according to some embodiments of the present application; FIG. 6 is a schematic cross-sectional view of the housing shown in FIG. 5 taken along line A-A; FIG. 7 is a schematic top view of a battery cell according to some embodiments of the present application; FIG. 8 is a schematic cross-sectional view, taken along line B-B, of the battery cell shown in FIG. 7 which uses the housing of the embodiment of FIG. 5; FIG. 9 is a schematic enlarged view of part C of the battery cell shown in FIG. 8; and FIG. 10 is a schematic enlarged view of part D of the battery cell shown in FIG. 8.

Referring to FIGS. 5 to 10, in some embodiments, the first passageway 2151 comprises a plurality of first grooves 2141 provided in an inner surface 2120 of a first side plate 212 and extending along the inner surface 2120 of the first side plate 212, and an end of each of the first grooves 2141 communicates with the pressure relief mechanism 30. The first passageway 2151 is provided as the plurality of first grooves 2141, and each of the first grooves 2141 communicates with the pressure relief mechanism 30. When the battery cell 7 is subjected to thermal runaway, the released gas can be directed along the first grooves 2141 from the accommodating space 216 to the pressure relief mechanism 30 for discharge, such that the exhaust rate when the battery cell 7 is subjected to thermal runaway is increased, and the safety of the battery cell 7 is improved. In addition, the first grooves 2141 are provided in the inner surface of the first side plate 212, thereby avoiding occupancy of the accommodating space 216 which may impair the energy density of the battery cell 7.

Referring to FIGS. 5 and 6, in some embodiments, the plurality of first grooves 2141 are parallel to each other and are spaced apart from each other. In some embodiments, each of the first grooves 2141 extends in a third direction Y, and the third direction Y is perpendicular to the first direction Z; and a plurality of first grooves 2141 are arranged in a second direction X, and the second direction X is perpendicular to the first direction Z and the third direction Y.

In some embodiments, in the second direction X, a plurality of first grooves 2141 may have the same width or different widths. In some embodiments, in the first direction Z, a plurality of first grooves 2141 may have the same depth or different depths.

The housing 21 includes a pair of second side plates 213 arranged opposite one another in the third direction Y, and a pair of third side plates 211 arranged opposite one another in the second direction X. The second side plates 213 and the third side plates 211 are connected to the first side plate 212, and adjacent second side plates 213 and third side plates 211 are also connected to jointly form an accommodating space 216.

One end of each of the plurality of first grooves 2141 communicates with the pressure relief port 210, and the other end thereof extends to a position close to the second side plate 213.

Referring to FIGS. 7 to 10, the accommodating space 216 includes a first gap G1 provided between the electrode assembly 10 and each of the second side plates 213. The first passageway 2151 communicates with the first gap G1. The first passageway 2151 communicates with the first gap G1 to implement communication between the first passageway 2151 and the accommodating space 216. In addition, the gas generated inside the electrode assembly 10 can also directly enter the pressure relief mechanism 30 through the first passageway 2151.

Referring to FIG. 9, the first gap G1 is formed between the electrode assembly 10 and each of second side plates 213, and a plurality of first grooves 2141 forming the first passageway 2151 extend to the vicinity of the second side plates 213 adjacent thereto in the third direction Y, cross a lower edge of the electrode assembly 10 in the third direction Y, and communicate with the first gap G1. Therefore, when an excessive gas generated by the battery cell 7 causes the internal pressure of the housing 21 to rise and reach the threshold, after passing through the first gap G1, the gas can move, without being blocked by the electrode assembly 10, through the plurality of first grooves 2141 to the pressure relief mechanism 30 for discharge. In addition, the gas generated in the electrode assembly 10 can also directly enter the pressure relief mechanism 30 through the first passageway 2151, thereby improving the exhaust efficiency.

In some embodiments, one first gap G1 is formed between the electrode assembly 10 and each of the second side plates 213, and each of the plurality of first grooves 2141 is connected to the first gaps G1 on two sides and the pressure relief mechanism 30 in the third direction Y.

Referring to FIG. 10, in some embodiments, from a position at which the first passageway 2151 communicates with the pressure relief mechanism 30, at least a length of the first passageway 2151 has a depth H gradually decreasing in a direction away from the pressure relief mechanism 30.

Specifically, from a position at which the first passageway 2151 communicates with the pressure relief mechanism 30, for at least a length of each of the first grooves 2141 forming the first passageway 2151 in the third direction Y, the groove 2141 has a depth H gradually decreasing in a direction away from the pressure relief mechanism 30. As shown in FIG. 10, at least a length of the first groove 2141 has a depth H gradually increasing in a direction of the pressure relief mechanism 30, creating a slope inclined toward an exhaust direction of the pressure relief mechanism 30, which is more beneficial to directing the gas to the pressure relief mechanism 30 for discharge and improves the exhaust efficiency. The slope may be inclined in a straight line or an arc.

"A length of' means that the section with varying depth H is only a length of the first passageway 2151 connected to the pressure relief mechanism 30 in the third direction Y, and the depth of the rest of the first passageway 2151 may be kept constant. In some other embodiments, the first passageway 2151 may have a depth H varying for the entire length of the first passageway 2151.

The position at which the first passageway 2151 communicates with the pressure relief mechanism 30 refers to a position at which the first passageway 2151 is connected to an edge of the pressure relief mechanism 30. When the housing 21 is provided with the pressure relief port 210, the position at which the first passageway 2151 communicates with the pressure relief mechanism 30 refers to a position at which the first passageway 2151 is connected to the pressure relief port 210.

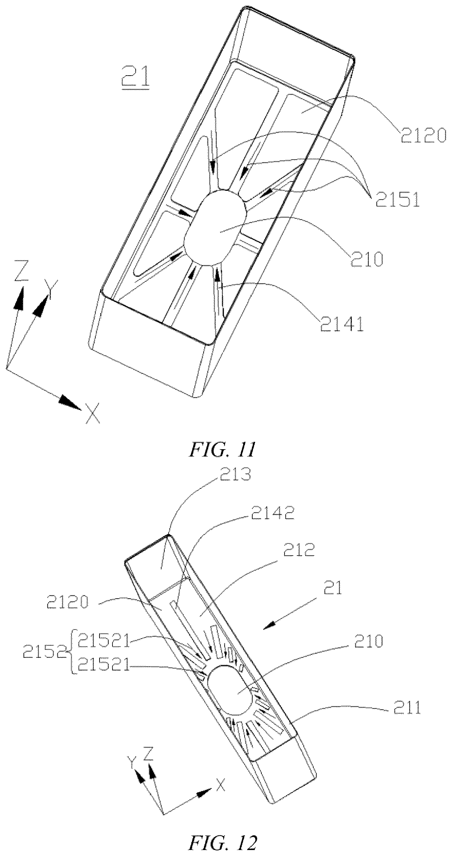

FIG. 11 is a schematic structural diagram of a housing of a battery cell according to yet another embodiment of the present application.

Referring to the embodiment in FIG. 11, the housing 21 in FIG. 11 is different from the housing 21 in the embodiment of FIG. 5 in that a plurality of first grooves 2141 extend radially with the pressure relief mechanism 30 as a center and are spaced apart from each other.

Specifically, the plurality of first grooves 2141 jointly form a first passageway 2151, and the plurality of first grooves 2141 extend radially with the pressure relief mechanism 30 as the center and are spaced apart from each other. Extending radially means that the plurality of first grooves 2141 are centered in the pressure relief mechanism 30, and the plurality of first grooves 2141 generally extend in radial directions with the center of the pressure relief mechanism 30 as an axis. One end of each of the plurality of first grooves 2141 communicates with the pressure relief mechanism 30. In some embodiments, the plurality of first grooves 2141 are connected to the pressure relief port 210. The other end of each of some of the first grooves 2141 extends to the vicinity of a second side plate 213 adjacent thereto, and the other end of each of some other first grooves 2141 extend to the vicinity of a third side plate 211.

In this embodiment, the accommodating space 216 includes a first gap G1 provided between the electrode assembly 10 and each of the second side plates 213, and the first grooves 2141 extending to the vicinity of the second side plates 213 adjacent thereto communicate with the first gaps G1. The accommodating space 216 further includes a second gap G2 provided between the electrode assembly 10 and each of the third side plates 211, and some of the first grooves 2141 extending to the vicinity of the third side plate 211 communicate with the second gaps G2. In this way, when the battery cell 7 is subjected to thermal runaway, the gas can be directed to the pressure relief mechanism 30 along the first passageway 2151 through the first gaps G1 and the second gaps G2 in a circumferential direction of the pressure relief mechanism 30. In addition, the gas generated inside the electrode assembly 10 can also directly enter the pressure relief mechanism 30 through the first passageway 2151. An exhaust rate when the battery cell 7 is subjected to thermal runaway can be increased, and the safety of the battery cell 7 can be improved.

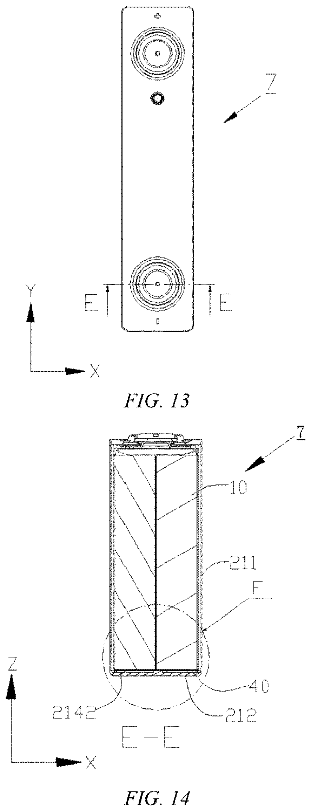

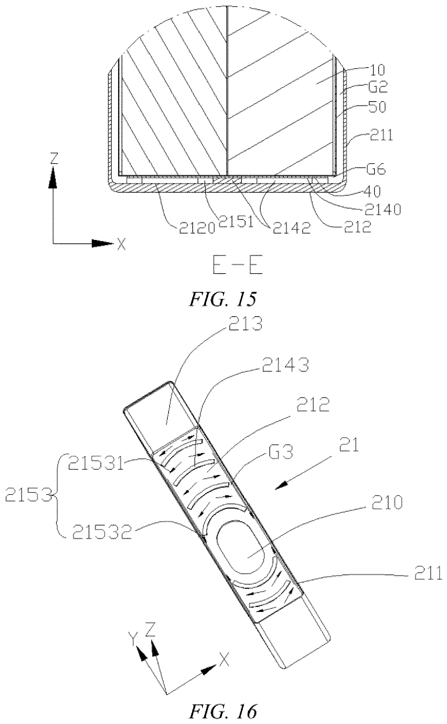

FIG. 12 is a schematic structural diagram of a housing of a battery cell according to yet another embodiment of the present application; FIG. 13 is a schematic top view of a battery cell according to yet another embodiment of the present application; FIG. 14 is a schematic cross-sectional view, taken along line E-E, of the battery cell shown in FIG. 13 which uses the housing of the embodiment of FIG. 12; and FIG. 15 is a schematic enlarged view of part F of the battery cell shown in FIG. 14.

Referring to FIGS. 12 to 15, in some embodiments, in the housing 21, protrusions 2142 protruding toward the accommodating space 216 are formed on the inner surface of the first side plate 212, each of the protrusions 2142 has a top surface 2140 away from the inner surface 2120, and a first passageway 2152 is formed in a space between the top surface 2140 of the protrusion 2142 and the inner surface 2120. In this embodiment, the top surface 2140 of the protrusion 2142 is used to support the electrode assembly 10, and the first passageway 2152 is formed in the space between the top surface 2140 of the protrusion 2142 and the inner surface 2120, which can increase the exhaust rate when the battery cell 7 is subjected to thermal runaway, and improve the safety of the battery cell 7. In some embodiments, as shown in FIG. 12, the first passageway 2152 comprises a plurality of sub-passageways 21521 communicating with the pressure relief mechanism 30; and a plurality of protrusions 2142 are provided, and the plurality of protrusions 2142 extend radially with the pressure relief mechanism 30 as the center and are spaced apart from each other, such that one sub-passageway 21521 is formed between two adjacent protrusions 2142 and the inner surface 2120. The plurality of protrusions 2142 extend radially with the pressure relief mechanism 30 as the center and are spaced apart from each other, which is beneficial to improve the exhaust efficiency of the pressure relief mechanism 30 in a circumferential direction.

Specifically, one sub-passageway 21521 is formed between two adjacent protrusions 2142 and the inner surface 2120, and the plurality of sub-passageways 21521 extend radially with the pressure relief mechanism 30 as the center and are spaced apart from each other. Extending radially means that the plurality of sub-passageways 21521 are centered in the pressure relief mechanism 30, and the plurality of sub-passageways 21521 generally extend in radial directions with a central point of the pressure relief mechanism 30 as an axis. One end of each of the plurality of sub-passageways 21521 communicates with the pressure relief mechanism 30. In some embodiments, the plurality of sub-passageways 21521 are connected to the pressure relief port 210. The other end of each of some sub-passageways 21521 extends to the vicinity of one second side plate 213, and communicates with the first gap G1; the other end of each of some other sub-passageways 21521 extends to the vicinity of one third side plate 211, and communicates with the second gap G2.

In this embodiment, the accommodating space 216 includes a first gap G1 provided between the electrode assembly 10 and each of the second side plates 213, and some sub-passageways 21521 extending to the vicinity of one second side plate 213 communicate with the first gap G1. As shown in FIGS. 14 and 15, the accommodating space 216 further includes a second gap G2 provided between the electrode assembly 10 and each of the third side plates 211, and some sub-passageways 21521 extending to the vicinity of one third side plate 211 communicate with the second gap G2. In this way, when the battery cell 7 is subjected to thermal runaway, the gas can be directed to the pressure relief mechanism 30 along the first passageway 2152 in a circumferential direction of the pressure relief mechanism 30. In addition, the gas generated inside the electrode assembly 10 can also directly enter the pressure relief mechanism 30 through the first passageway 2152. An exhaust rate when the battery cell 7 is subjected to thermal runaway can be increased, and the safety of the battery cell 7 can be improved.

In addition, in the embodiments of FIGS. 11 and 12, or referring to the embodiment of FIG. 10, from a position at which the first passageway 2151 communicates with the pressure relief mechanism 30, at least a length of the first passageway 2151 has a depth H gradually decreasing in a direction away from the pressure relief mechanism 30.

FIG. 16 is a schematic structural diagram of a housing of a battery cell according to yet another embodiment of the present application.

As shown in FIG. 16, in some embodiments, in the housing 21, a first passageway 2153 comprises a plurality of sub-passageways 21531 and a connection passageway 21532; a plurality of protrusions 2143 are provided, and each of the protrusions 2143 extends substantially in a second direction X of a first side plate 212; the plurality of protrusions 2143 are arranged at intervals in a third direction Y of the first side plate 212 and are spaced apart from each other; one sub-passageway 21531 is formed between two adjacent protrusions 2143 and the inner surface 2120, and two adjacent sub-passageways 21531 communicate with each other through the connection passageway 21532; at least one of the sub-passageways 21531 communicates with the pressure relief mechanism 30 through the connection passageway 21532; the second direction X is perpendicular to a first direction Z; and the third direction Y is perpendicular to the first direction Z and the second direction X. By means of the provision of the protrusions 2143 extending in the second direction X of the first side plate 212, one sub-passageway 21531 is formed between two adjacent protrusions 2143 and the inner surface 2120, and the sub-passageway 21531 is connected to the pressure relief mechanism 30 through the connection passageway 21532, such that the exhaust efficiency in the second direction X can be increased. When the housing 21 has a width in the second direction X close to a length in the third direction Y, the first passageway 2153 of this embodiment can provide a better exhaust effect.

In this embodiment, a third gap G3 is provided between an end portion of each of the protrusions 2143 in the second direction X and one second side plate 213 adjacent thereto, and the third gap G3 forms at least a portion of the connection passageway 21532. The entire connection passageway 21532 extends in the third direction Y. By providing the third gap G3 to form a part of the connection passageway for connecting the sub-passageway 21531 to the pressure relief mechanism 30, the gas in the sub-passageway 21531 can be quickly directed through the connection passageway 21532 to the pressure relief mechanism 30 for discharge.

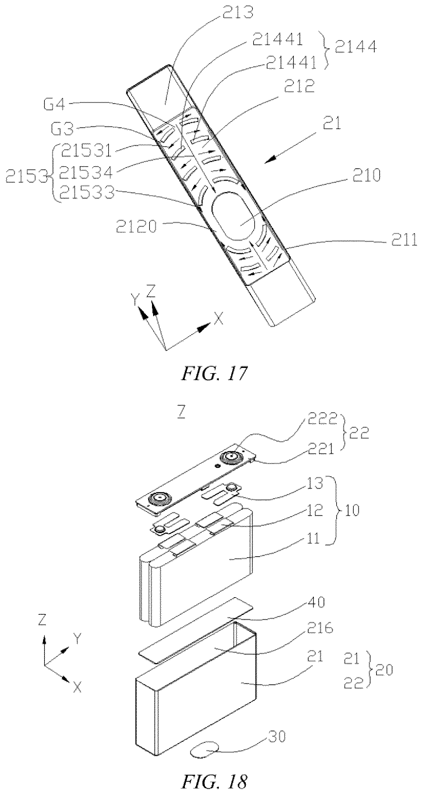

FIG. 17 is a schematic structural diagram of a housing of a battery cell according to yet another embodiment of the present application.

As shown in FIG. 17, this embodiment differs from the embodiment of FIG. 16 in that, in the housing 21, at least one protrusion 2144 includes a plurality of sub-protrusions 21441, and the sub-protrusions 21441 are spaced apart in the second direction X. A fourth gap G4 is formed between adjacent sub-protrusions 21441, and the fourth gap G4 also forms at least a portion of the connection passageway 21532, that is, in this embodiment, the connection passageway 21532 includes a side connection passageway 21533 of which the third gap G3 forms a section, and a middle connection passageway 21534 of which the fourth gap G4 forms a section. By providing the fourth gap G4 to form the middle connection passageway 21534 for connecting the sub-passageway 21531 to the pressure relief mechanism, the middle connection passageway 21534 cooperates with the side connection passageway 21533, such that the gas in the sub-passageway 21531 can be quickly directed through the connection passageway 21532 to the pressure relief mechanism 30 for discharge.

Optionally, in the embodiments shown in FIGS. 16 and 17, the protrusions 2143 or the protrusions 2144 are formed as arcs or broken lines which protrude away from the pressure relief mechanism 30 in the third direction Y. The arc-shaped or broken line-shaped protrusions 2143 or protrusions 2144 protruding away from the pressure relief mechanism 30 in the third direction Y can direct a gas flow toward the pressure relief mechanism 30 during exhausting, which is beneficial to rapid exhaust of the gas.

In the foregoing embodiments, an insulating layer may be further provided on a top surface 2140 of each of the protrusions 2143 or the protrusions 2144, and the insulating layer is configured to implement insulation between the electrode assembly 10 and the housing 21 without additional supporting members, thereby reducing the occupancy of the accommodating space 216 and improving the energy density of the battery cell 7 without impairing the exhaust of the battery cell 7.

FIG. 18 is a schematic structural diagram of a battery cell according to yet another embodiment of the present application.

As shown in FIG. 18, this embodiment is different from the foregoing embodiments in that a supporting member 40 is added. The supporting member 40 is arranged between the electrode assembly 10 and the first side plate 212 and is configured to support the electrode assembly 10. The electrode assembly 10, the supporting member 40, and the first side plate 212 are sequentially arranged in the first direction Z. For example, the supporting member 40 is made of an insulating material, and can insulate and separate the first side plate 212 from the electrode assembly 10. The supporting member 40 can support the electrode assembly 10 to reduce shaking of the electrode assembly 10 when the battery cell 7 vibrates, which reduces the risk of an active material of the electrode assembly 10 falling off.

The supporting member 40 may directly abut against the electrode assembly 10 to support the electrode assembly 10, or may support the electrode assembly 10 by means of other members. For example, the battery cell 7 further includes an insulating film wrapping around an outer side of a main body portion 11 of the electrode assembly 10, a portion of the insulating film is located between the supporting member 40 and the electrode assembly 10, and the supporting member 40 supports the electrode assembly 10 by the insulating film. The supporting member 40 has a first surface 41 and a second surface 42 which are arranged opposite one another, the first surface 41 facing the first side plate 212, and the second surface 42 facing the electrode assembly 10.

In some embodiments, the supporting member 40 can abut against the first side plate 212. For example, in the embodiments of FIGS. 5 to 11, the supporting member 40 may press against the first side plate 212 under an action of the gravity of the electrode assembly 10, and is in contact with the inner surface 2120 of the first side plate 212. Referring to the embodiments of FIGS. 9 and 10, a first passageway is formed between the first grooves 2141 between the first surface 41 of the supporting member 40 and the first side plates 212. Referring to FIG. 9, a fifth gap G5 is formed between the supporting member 40 and the second side plate 213 in the third direction Y. Furthermore, referring to the embodiment of FIG. 15, a sixth gap G6 is formed between the supporting member 40 and an adjacent third side plate 211 in the second direction X. The first gap G1 communicates with the first passageway 2151 through the fifth gap G5. The second gap G2 communicates with the first passageway 2151 through the sixth gap G6.

The supporting member 40 may also be spaced apart from the first side plate 212 in the first direction Z. For example, in the embodiments of FIGS. 12 to 17, the supporting member 40 may be placed on surfaces of the protrusions 2142, 2143 or 2144, and is spaced apart from the inner surface 2120 of the first side plate 212. The first passageway 2152 or 2153 is formed between the first surface 41 of the supporting member 40 and the inner surface 2120 of the first side plate 212.

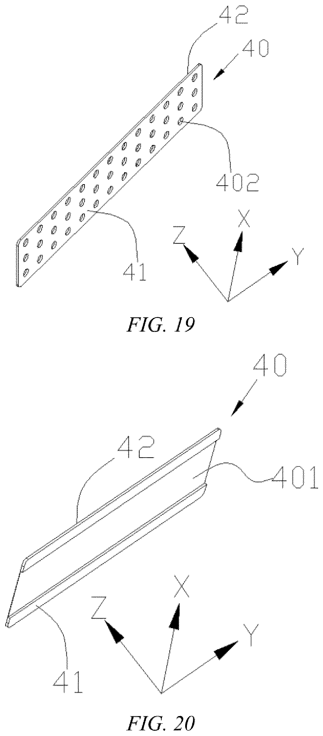

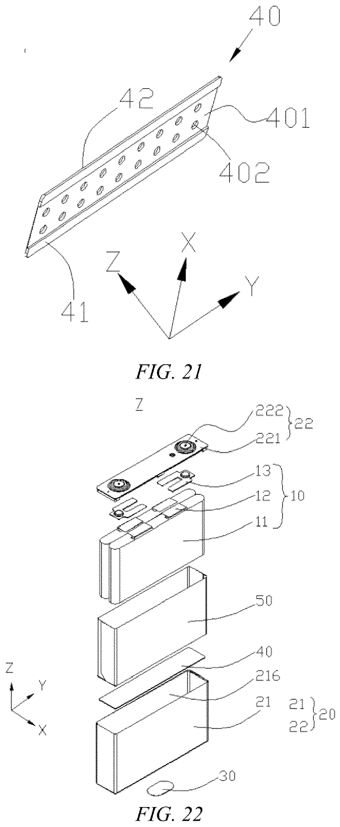

FIG. 19 is a schematic structural diagram of a supporting member of a battery cell according to yet another embodiment of the present application; FIG. 20 is a schematic structural diagram of a supporting member of a battery cell according to yet another embodiment of the present application; and FIG. 21 is a schematic structural diagram of a supporting member of a battery cell according to yet another embodiment of the present application.

In some embodiments, the supporting member 40 is provided with a second passageway through which the first passageway 2151, 2152 or 2153 communicates with the accommodating space 216. The second passageway is formed in the supporting member 40 to allow the first passageway 2151, 2152 or 2153 to communicate with the accommodating space 216, such that a passageway area for exhaust can be increased, and the exhaust efficiency can be improved.

Referring to FIG. 19, in some embodiments, the second passageway comprises a first through hole 402 running through the supporting member 40 in the first direction Z, and the first through hole 402 allow the first passageway 2151, 2152 or 2153 to communicate with the accommodating space 216 in the first direction Z.

Referring to FIG. 20, in some embodiments, the second passageway comprises a second groove 401 provided on the first surface 41, the second groove 401 communicates with the first gap G1 and/or the second gap G2, and the second groove 401 communicates with the first passageway. The provision of the second groove 401 on the supporting member 40 which communicates with the first gap G1 and/or the second gap G2 and the first passageway 2151, 2152 or 2153 can provide an increased passageway area for exhaust and higher exhaust efficiency.

Specifically, the second groove 401 may be formed as a groove penetrating in the second direction X and/or the third direction Y. The second groove 401 extends to an edge of the supporting member 40 in the second direction X and/or in the third direction Y. The second groove 401 communicates with the fifth gap G5 and/or the sixth gap G6, and communicates with the accommodating space 216 through the fifth gap G5 and/or the sixth gap G6.

As shown in FIG. 21, in some embodiments, first through holes 402 and a second groove 401 are provided in the supporting member 40, and the first through holes 402 communicate with the second groove 401. This can further increase the passageway area for exhaust and improve the exhaust efficiency.

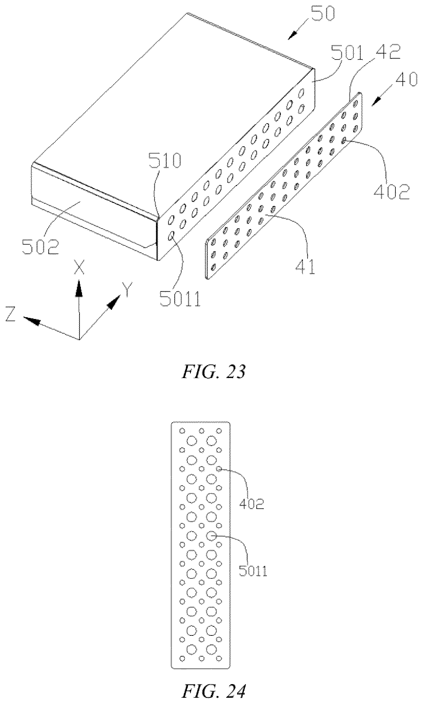

FIG. 22 is a schematic structural diagram of a battery cell provided with a supporting member and an insulating film according to yet another embodiment of the present application; FIG. 23 is a schematic exploded view of a supporting member and an insulating film of a battery cell according to yet another embodiment of the present application; and FIG. 24 is a schematic top view of the combined supporting member and insulating film shown in FIG. 23.

As shown in FIGS. 22 to 24, in some embodiments, the battery cell 7 further includes an insulating film 50 wrapping around an outer side of a main body portion 11 of the electrode assembly 10, a portion of the insulating film 50 is located between the supporting member 40 and the electrode assembly 10, and the supporting member 40 supports the electrode assembly 10 by the insulating film 50. The supporting member 40 has a first surface 41 and a second surface 42 which are arranged opposite one another, the first surface 41 facing the first side plate 2120, and the second surface 42 facing the insulating film 50.

In some embodiments, the insulating film 50 is configured to be wrapped around a portion of the electrode assembly 10 and separate the electrode assembly 10 from the housing 21; the insulating film 50 includes a first side film 501 located between the electrode assembly 10 and the supporting member 40; and the first side film 501 is provided with second through holes 5011, and the projections of the second through holes 5011 and the first through holes 402 of the supporting member 40 in the first direction Z do not overlap. The projections of the second through holes 5011 of the first side film 501 of the insulating film 50 and the first through holes 402 of the supporting member 40 in the first direction Z do not overlap, which can prevent the electrode assembly 10 from coming into direct contact with the first side plate 212 of the housing 21, such that reliable insulation between the electrode assembly 10 and the first side plate 212 can be implemented, and the accommodating space 216 communicates with the first passageway 2151, 2152 or 2153 through the first through holes 402 and the second through holes 5011, thereby improving the exhaust efficiency.

In some embodiments, referring to FIGS. 9 and 23, the first side film 501 is located on a side of the insulating film 50 in the first direction Z. The insulating film 50 is provided with third side films 502 that are oppositely arranged in the third direction Y, and each of the third side films 502 is provided with an opening 510 at a position close to the first side film 501. The gas generated in the electrode assembly 10 around which the insulating film 50 is wrapped can be connected to the first passageway 2151, 2152 or 2153 through the second through holes 5011 and the first through holes 402 on the one hand, and can be connected to the first passageway 2151, 2152 or 2153 through the opening 510, the first gap G1, and the third gap G3 on the other hand, and is then discharged through the pressure relief mechanism 30, thereby increasing the passageway area for exhaust and improving the exhaust efficiency.

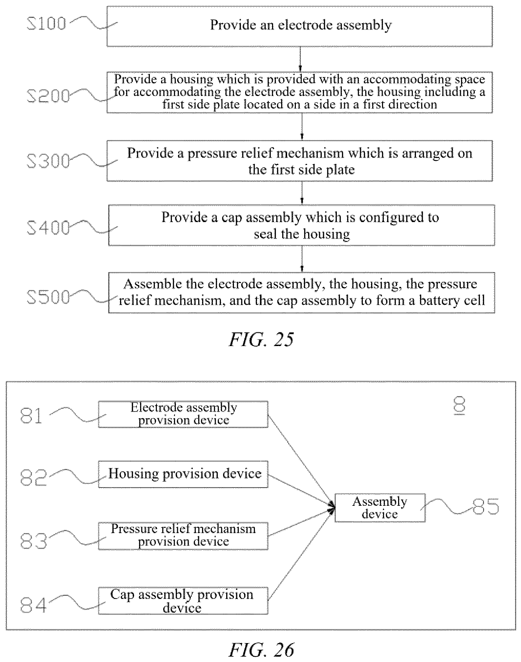

FIG. 25 is a schematic flowchart of a method for manufacturing a battery cell according to some embodiments of the present application.

As shown in FIG. 25, the method for manufacturing a battery cell according to the embodiments of the present application includes:
step S 100 of providing an electrode assembly;
step S200 of providing a housing which is provided with an accommodating space for accommodating the electrode assembly; the housing including a first side plate located on a side in a first direction;
step S300 of providing a pressure relief mechanism which is arranged on the first side plate;
step S400 of providing a cap assembly which is configured to seal the housing; and
step S500 of assembling the electrode assembly, the housing, the pressure relief mechanism, and the cap assembly to form the battery cell;
wherein the step S200 of providing a housing further includes forming, in an inner surface of the first side plate of the housing, a first passageway extending along the inner surface, and the first passageway is configured to direct a gas in the accommodating space to the pressure relief mechanism, such that the pressure relief mechanism is actuated and relieves a pressure when the pressure reaches a threshold.

It should be noted that for a related structure of the battery cell manufactured by the foregoing method for manufacturing a battery cell, reference may be made to the battery cells provided in the foregoing embodiments.

When a battery cell is assembled based on the foregoing method for manufacturing a battery cell, it is not necessary to sequentially perform the foregoing steps, that is to say, the steps may be performed in the order mentioned in the embodiments, or the steps may be performed in an different order from the order mentioned in the embodiments, or several steps are performed simultaneously. For example, steps S100, S200, S300, and S400 may be performed in a random order, or may be performed simultaneously.

FIG. 26 is a schematic block diagram of a system for manufacturing a battery cell according to some embodiments of the present application.

As shown in FIG. 26, the system 8 for manufacturing a battery cell according to the embodiments of the present application includes: an electrode assembly provision device 81 configured to provide an electrode assembly; a housing provision device 82 configured to provide a housing, the housing being provided with an accommodating space for accommodating the electrode assembly, and the housing including a first side plate located on a side in a first direction; a pressure relief mechanism provision device 83 configured to provide a pressure relief mechanism which is arranged on the first side plate; a cap assembly provision device 84 configured to provide a cap assembly which is configured to seal the housing; and an assembly device 85 configured to assemble the electrode assembly, the housing, the pressure relief mechanism, and the cap assembly to form the battery cell, wherein a first passageway extending along an inner surface is formed in the inner surface of the first side plate of the housing, and the first passageway is configured to direct a gas in the accommodating space to the pressure relief mechanism, such that the pressure relief mechanism is actuated and relieves a pressure when the pressure reaches a threshold.

For a related structure of the battery cell manufactured by the foregoing manufacturing system, reference may be made to the battery cells provided in the foregoing embodiments. It should be noted that the embodiments in the present application and features in the embodiments may be combined with each other without conflicts.

Finally, it should be noted that the foregoing embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the present application.

## Claims

1. A battery cell comprising:
an electrode assembly
a housing provided with an accommodating space for accommodating the electrode assembly the housing comprising a first side plate on a side in a first direction
a pressure relief mechanism arranged on the first side plate and
a cap assembly configured to seal the housing
wherein an inner surface of the first side plate of the housing is provided with a first passageway extending along the inner surface and the first passageway is used to direct a gas in the accommodating space to the pressure relief mechanism such that the pressure relief mechanism is actuated and relieves a pressure when the pressure reaches a threshold.

2. The battery cell according to claim 1, wherein the first passageway comprises a plurality of first grooves provided in the inner surface of the first side plate and extending along the inner surface of the first side plate and an end of each of the first grooves communicates with the pressure relief mechanism

3. The battery cell according to claim 2, wherein the plurality of first grooves are parallel to each other; or
the plurality of first grooves extend radially with the pressure relief mechanism as a center.

4. The battery cell according to claim 1, wherein protrusions protruding toward the accommodating space are formed on the inner surface of the first side plate each of the protrusions has a top surface away from the inner surface and the first passageway is formed in a space between the top surface of the protrusion and the inner surface

5. The battery cell according to claim 4, wherein the first passageway comprises a plurality of sub-passageways communicating with the pressure relief mechanism and a plurality of protrusions are provided, and the plurality of protrusions extend radially with the pressure relief mechanism as the center and are spaced apart from each other, such that one sub-passageway is formed between two adjacent protrusions and the inner surface

6. The battery cell according to claim 4, wherein the first passageway comprises a plurality of sub-passageways and a connection passageway a plurality of protrusions are provided, and each of the protrusions extends substantially in a second direction of the first side plate the plurality of protrusions are arranged at intervals in a third direction of the first side plate and are spaced apart from each other; one sub-passageways is formed between two adjacent protrusions and the inner surface and two adjacent sub-passageways communicate with each other through the connection passageway at least one of the sub-passageways communicates with the pressure relief mechanism through the connection passageway the second direction is perpendicular to the first direction and the third direction is perpendicular to the first direction and the second direction

7. The battery cell according to claim 6, wherein the housing comprises a pair of second side plates arranged opposite one another in the second direction and
a third gap is provided between an end portion of each of the protrusions in the second direction and one second side plate adjacent thereto, and the third gap forms at least a part of the connection passageway

8. The battery cell according to claim 6 or 7, wherein at least one of the protrusions comprises a plurality of sub-protrusions the plurality of sub-protrusions are spaced in the second direction a fourth gap is formed between adjacent sub-protrusions and the fourth gap forms at least a part of the connection passageway

9. The battery cell according to any one of claims 4 to 8, wherein the protrusions are formed as arcs or broken lines which protrude away from the pressure relief mechanism in the third direction

10. The battery cell according to any one of claims 4 to 8, wherein an insulating layer is provided on a top surface of each of the protrusions

11. The battery cell according to any one of claims 1 to 10, wherein
the housing comprises a pair of second side plates opposite one another in the second direction and the accommodating space comprises a first gap provided between the electrode assembly and each of the second side plates the second direction is perpendicular to the first direction and
the housing further comprises a pair of third side plates arranged opposite one another in the third direction and the accommodating space further comprises a second gap provided between the electrode assembly and each of the third side plates the third direction is perpendicular to the first direction and the second direction and
the first passageway communicates with the first gap and/or the second gap

12. The battery cell according to any one of claims 1 to 11, wherein from a position at which the first passageway communicates with the pressure relief mechanism at least a length of the first passageway has a depth gradually decreasing in a direction away from the pressure relief mechanism

13. The battery cell according to any one of claims 1 to 12, further comprising:
a supporting member arranged between the first side plate and the electrode assembly to support the electrode assembly wherein the supporting member is provided with a second passageway through which the first passageway communicate with the accommodating space

14. The battery cell according to claim 13, wherein
the second passageway comprises first through holes running through the supporting member in the first direction and the first passageway communicate with the accommodating space through the first through holes

15. The battery cell according to claim 13 or 14, wherein
the housing comprises a pair of second side plates opposite one another in the second direction and the accommodating space comprises a first gap provided between the electrode assembly and each of the second side plates the second direction is perpendicular to the first direction and
the housing further comprises a pair of third side plates arranged opposite one another in the third direction and the accommodating space further comprises a second gap provided between the electrode assembly and each of the third side plates the third direction is perpendicular to the first direction and the second direction and
the supporting member has a first surface and a second surface which are arranged opposite one another, the first surface facing the first side plate and the second surface facing the electrode assembly and
the second passageway comprises a second groove provided in the first surface the second groove communicates with the first gap and/or the second gap and the second groove communicates with the first passageway

16. The battery cell according to claim 14, further comprising:
an insulating film configured to be wrapped around a portion of the electrode assembly and separate the electrode assembly from the housing wherein the insulating film comprises a first side film located between the electrode assembly and the supporting member; and
the first side film is provided with second through holes and the projections of the second through holes and the first through holes of the supporting member in the first direction do not overlap.

17. A battery comprising the battery cell according to any one of claims 1 to 16.

18. A power consuming device, comprising the battery according to claim 17.

19. A method for manufacturing a battery cell comprising:
providing an electrode assembly
providing a housing which is provided with an accommodating space for accommodating the electrode assembly the housing comprising a first side plate located on a side in a first direction
providing a pressure relief mechanism which is arranged on the first side plate providing a cap assembly which is configured to seal the housing and
assembling the electrode assembly the housing the pressure relief mechanism and the cap assembly to form the battery cell
wherein providing a housing comprises forming, in an inner surface of the first side plate of the housing a first passageway extending along the inner surface and the first passageway is configured to direct a gas in the accommodating space to the pressure relief mechanism such that the pressure relief mechanism is actuated and relieves a pressure when the pressure reaches a threshold.

20. A system for manufacturing a battery cell comprising:
an electrode assembly provision device configured to provide an electrode assembly
a housing provision device configured to provide a housing the housing being provided with an accommodating space for accommodating the electrode assembly and the housing comprising a first side plate located on a side in a first direction
a pressure relief mechanism provision device configured to provide a pressure relief mechanism which is arranged on the first side plate
a cap assembly provision device configured to provide a cap assembly which is configured to seal the housing and
an assembly device configured to assemble the electrode assembly the housing the pressure relief mechanism and the cap assembly to form the battery cell
wherein a first passageway extending along an inner surface is formed in the inner surface of the first side plate of the housing and the first passageway is configured to direct a gas in the accommodating space to the pressure relief mechanism such that the pressure relief mechanism is actuated and relieves a pressure when the pressure reaches a threshold.
